# EUROPEAN PATENT APPLICATION

(11) **EP 4 015 846 A1**
(43) Date of publication of application: **22.06.2022**
(21) Application number: 21182617.7
(22) Date of filing: 29.06.2021
(51) Int. Cl.: F16B 25/00, F16B 25/10, F16B 23/00

(54) **A KIND OF THREAD ROLLING SCREW MOLTEN THROUGH FRICTION**

(30) Priority: 18.12.2020 CN 202011505481
(71) Applicant: Essence Fastening System (Shanghai) Co., Ltd., Shanghai 201822 (CN)
(72) Inventor: YI, Qinfeng, Shanghai, 201822 (CN); GAO, Songfeng, Shanghai, 201822 (CN); WANG, Huiying, Shanghai, 201822 (CN)
(74) Representative: Ipey

(57) **Abstract**

A kind of thread rolling screw molten through friction which is involved in metal plate installation field is publicized in the invention, and it is used to solve the problem that the method for breaking through the tradition is not formed for current connecting thread of metal plate structure to realize the simple and rapid efficiency improvement. The top of locating tip of the stated cone is connected with the expanding cone in a fixed way. The top of the stated expanding cone is connected with the pored shaping section in a fixed way. The top of the stated pored shaping section is connected with the transition section in a fixed way. The top of the stated transition section is connected with the self-tapping thread section in a fixed way. The external surface of the stated self-tapping thread section is set with tapered thread. The top of the stated self-tapping thread section is connected with the cylindrical locking thread section in a fixed way. The external surface of the stated cylindrical locking thread section is set with external thread. The top of the stated cylindrical locking thread section is connected with the transition fillet in a fixed way. The top of the stated transition fillet is connected with the concave storage ring in a fixed way. The top of the stated concave storage ring is connected with the flange in a fixed way.

## Description

### Technology field

The invention is a kind of thread rolling screw molten through friction which is involved in metal plate installation field.

### Background technology

The screw and bolt are the basic individual parts for industrial application. Two or above structural parts are connected and fastened. In general, the fastened structural parts and fastening structural parts will be prefabricated to threaded hole, or be extruded or cut to form the prefabricated hole of thread, and be connected and fastened through steel self-tapping screw or bolt.

In recent years, after the friction drill technology is applied in the formation of connecting thread of plate metal structure at home increasingly to realize the perforation without scraps, the thread is formed by screw tap cutting, and the traditional method is not broken through to realize the application of simple and rapid efficiency improvement, especially the installation and application of lightweight metal plate component.

### Summary of the invention

The Invention is aimed at providing a kind of thread rolling screw molten through friction to solve the problem that the method for breaking through the tradition is not formed for current connecting thread of metal plate structure proposed in the above background technology to realize the simple and rapid efficiency improvement.

To fulfill the aforesaid objectives, this invention adopts the following technical solutions: A kind of thread rolling screw molten through friction, including locating tip of the cone. The top of locating tip of the stated cone is connected with the expanding cone in a fixed way. The top of the stated expanding cone is connected with the pored shaping section in a fixed way. The top of the stated pored shaping section is connected with the transition section in a fixed way. The top of the stated transition section is connected with the self-tapping thread section in a fixed way. The external surface of the stated self-tapping thread section is set with tapered thread. The top of the self-tapping thread section is connected with the cylindrical locking thread section in a fixed way. The external surface of the stated cylindrical locking thread section is set with external thread. The top of the stated cylindrical locking thread section is connected with the arc angle in a fixed way. The top of the stated arc angle is connected with the concave storage ring in a fixed way. The top of the stated concave storage ring is connected with the flange in a fixed way.

In the further embodiment, the top of the stated flange is connected with the screw head in a fixed way, and one end of the stated concave storage ring is equipped with the circular groove.

In the further embodiment, one end of the stated screw head is set with external dodecagonal tool driving head, and the other end is set with internal driving torx.

In the further embodiment, the nominal diameter of the stated external thread is 4.8mm, and the pitch of thread is 1.8mm.

In the further embodiment, the thickness of the stated flange is 1.6mm, and the diameter is 13.8mm.

In the further embodiment, the diameter of the stated transition section is 4mm, and the length is 1.5mm.

In the further embodiment, the external surface of the stated pored shaping section, locating tip of the cone and expanding cone is set with the first friction thread, and the external surface of the stated pored shaping section and locating tip of the cone is set with the second friction thread.

In the further embodiment, the cone angle of the stated locating tip of the cone is 45°, that of the stated expanding cone is 12° and transited in the extruded natural arc shape, that of the stated pored shaping section is 30° and transited in the extruded natural arc shape, that of the stated self-tapping thread section is 8°, and the connected end face of the stated locating tip of the cone and expanding cone is transited in fillet.

Compared with existing technology, the beneficial effect of the invention is that:
1. In the invention, it is driven by the electric tool in use through cooperative setup among the pored shaping section, locating tip of the cone, expanding cone, self-tapping thread section and cylindrical locking thread section. The hot melting locating hole is formed through accurate locating of locating tip of the cone, and continues to be expanded to the pore diameter equivalent to the diameter of pored shaping section through propelling of expanding cone. The circular materials piled evenly are formed in the periphery of pore diameter. The thickness of connecting area of lightweight metal plate structural parts is pressurized. The thread is formed initially through cutting-in and extrusion function of self-tapping thread section, and then the thread section is locked by cylinder after being screwed in until the plane with connector is fit to the bearing surface of flange, reaches to the preset fastening torque, completes the connecting and fastening and connects the fixation and installation of the fastened parts, and reaches to the set requirement of pre-installed torque. Therefore, it has the advantages of concise operation, rapid installation and fastening of components and parts, convenient disassembly and recycling.
2. In the invention, the torx is located in the center of one end of external dodecagonal tool driving head in use through cooperative setting between screw head (external dodecagonal tool driving head) and torx. At the end that the cone angle of the stated pored shaping section is 30° and transited in the extruded natural arc shape, it is connected with the invention by electric tool through torx or external dodecagonal head barrel. Because the screw head is an external dodecagonal tool driving head, the torx is set inside. Therefore, it is also an external dodecagonal internal wabbler, and it can be also connected with the electric tool through internal torx. It is applicable to multi-tool connection, and it is used to contain a few scraps formed in the plane melting and extrusion process through setting of concave storage ring to avoid the insecure installation of components and parts.

### Brief description of the drawing

Figure 1 is a structure diagram of this invention;
Figure 2 is a front structure diagram of this invention;
Figure 3 is a vertical structure diagram of this invention.
Figure 4 is the other form of the invention to embody the schematic diagram.

Wherein: 1. Locating tip of the cone; 2. Expanding cone; 3. Pored shaping section; 4. Transition section; 5. Self-tapping thread section; 6. Tapered thread; 7. Cylindrical locking thread section; 8. External thread; 9. Arc angle; 10. Concave storage ring; 11. Flange; 12. Screw head; 13. Torx; 14. First friction thread; 15. Second friction thread; 16. External dodecagonal tool driving head.

### Embodiment

The technical solutions in embodiment of the invention will be clearly and completely described as follows combined with the attached figures in embodiment of the invention, obviously, the described embodiment is only part of the embodiments of the invention, but not all embodiments.

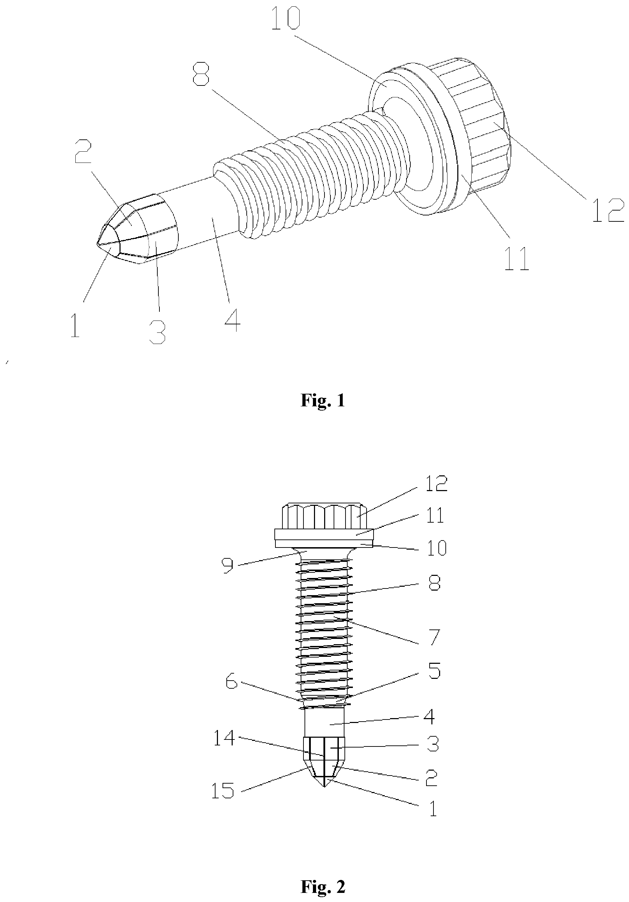

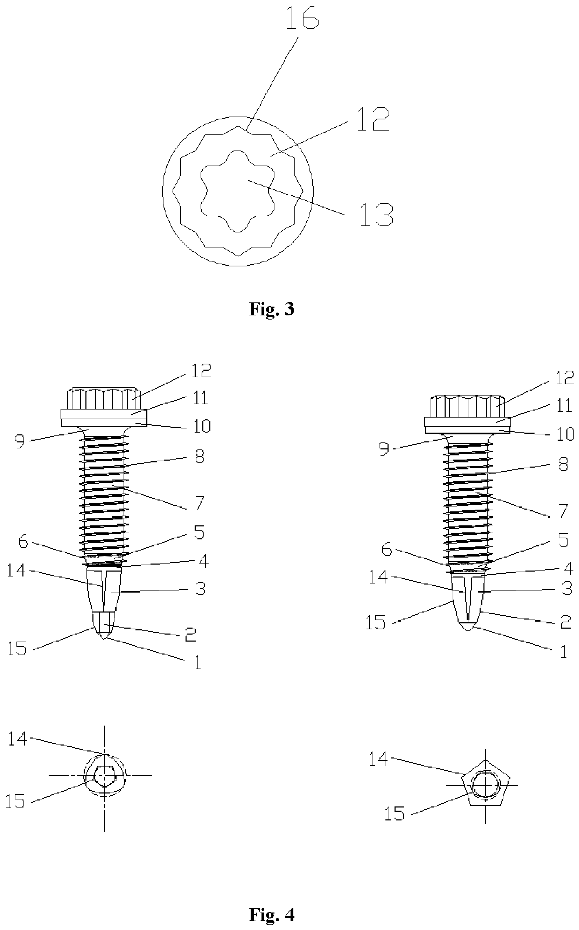

Please refer to Figure 1-3, an embodiment provided in the invention: A kind of thread rolling screw molten through friction, including locating tip of the cone 1. The top of locating tip of the cone 1 is connected with the expanding cone 2 in a fixed way. The top of the expanding cone 2 is connected with the pored shaping section 3 in a fixed way. The top of the pored shaping section 3 is connected with the transition section 4 in a fixed way. The top of the transition section 4 is connected with the self-tapping thread section 5 in a fixed way. The external surface of the self-tapping thread section 5 is set with tapered thread 6. The top of the self-tapping thread section 5 is connected with the cylindrical locking thread section 7 in a fixed way. The external surface of the cylindrical locking thread section 7 is set with external thread 8. The top of the cylindrical locking thread section 7 is connected with the arc angle 9 in a fixed way. The top of the arc angle 9 is connected with the concave storage ring 10 in a fixed way. The top of the concave storage ring 10 is connected with the flange 11 in a fixed way. The hot melting locating hole is formed through accurate locating of locating tip of the cone 1, and continues to be expanded to the pore diameter equivalent to the diameter of pored shaping section 3 through propelling of expanding cone 2. The circular materials piled evenly are formed in the periphery of pore diameter. The thickness of connecting area of lightweight metal plate structural parts is pressurized. The thread is formed initially through cutting-in and extrusion function of self-tapping thread section 5, and then the thread section 7 is locked by cylinder after being screwed in until the plane with connector is fit to the bearing surface of flange 11, reaches to the preset fastening torque, completes the connecting and fastening and connects the fixation and installation of the fastened parts, and reaches to the set requirement of pre-installed torque. Therefore, it has the advantages of concise operation, rapid installation and fastening of components and parts, convenient disassembly and recycling.

Further, the top of the flange 11 is connected with the screw head 12 in a fixed way, and one end of the concave storage ring 10 is equipped with the circular groove. The concave storage ring 10 is used to contain a few scraps formed in the plane melting and extrusion process to avoid the insecure installation of components and parts.

Further, one end of the screw head 12 is set with external dodecagonal tool driving head 16, and one end of external dodecagonal tool driving head 16 is set with driving torx 13, and is connected with the invention by electric tool through external dodecagonal tool driving head 16. Because the screw head 12 is an external dodecagonal tool driving head, the internal torx 13 is set inside. Therefore, it is also an external dodecagonal internal wabbler, and it can be also connected with the electric tool through internal torx. It is applicable to multi-tool connection.

Further, the nominal diameter of the external thread 8 is 4.8mm, and the pitch is 1.8mm. The plane of the connector is fit to the bearing surface of flange 11 through external thread 8, reaches to the preset fastening torque, and completes the connecting and fastening and connects the fixation and installation of the fastened parts.

Further, the thickness of the flange 11 is 1.6mm, and the diameter is 13.8mm, so as to ensure the stable friction coefficient required by tight locking force and prevent the locked fastener from being easily collapsed and deformed, etc.

Further, the diameter of the transition section 4 is 4mm, and the length is 1.5mm. It is specially set for the making and molding of body of screw, and its diameter is less than the minor diameter of external thread 8.

Further, the external surface of the pored shaping section 3, locating tip of the cone 1 and expanding cone 2 is set with the first friction thread 14, and the external surface of the pored shaping section 3 and locating tip of the cone 1 is set with the second friction thread 15. The friction force borne during rotating the pored shaping section 3, locating tip of the cone 1 and expanding cone 2 is increased through the first friction thread 14 and second friction thread 15, so as to rapidly form the hot melting hole.

Further, the cone angle of the locating tip of the cone 1 is 45°, that of the expanding cone 2 is 30°, that of the self-tapping thread section 5 is 8°, and the connected end face of the locating tip of the cone 1 and expanding cone 2 is transited in fillet. The structure in cone shape is easier to expand, and the fillet is transited to avoid the stress concentration from being damaged.

Working principle: In use, the invention is driven by the electric tool. The hot melting locating hole is formed through accurate locating of locating tip of the cone 1, and continues to be expanded to the pore diameter equivalent to the diameter of pored shaping section 3 through propelling of expanding cone 2. The circular materials piled evenly are formed in the periphery of pore diameter. The thickness of connecting area of lightweight metal plate structural parts is pressurized. The thread is formed initially through cutting-in and extrusion function of self-tapping thread section 5, and then the thread section 7 is locked by cylinder after being screwed in until the plane with connector is fit to the bearing surface of flange 11, reaches to the preset fastening torque, completes the connecting and fastening and connects the fixation and installation of the fastened parts, and reaches to the set requirement of pre-installed torque. Therefore, it has the advantages of concise operation, rapid installation and fastening of components and parts, convenient disassembly and recycling. The internal torx 13 is located at one end of the external dodecagonal tool driving head 16, and is connected with the invention by electric tool through the external dodecagonal tool driving head 16. Because the screw head 12 is an external dodecagonal tool driving head, the torx is set inside the screw head 12. Therefore, it is an external dodecagonal internal wabbler, and it can be also connected with the electric tool through internal torx. It is applicable to multi-tool connection, and it is used to contain a few scraps formed in the plane melting and extrusion process through setting of concave storage ring 10 to avoid the insecure installation of components and parts.

For technicians in this field, it is obvious that the invention is not limited to the details of above demonstrative embodiment, and the invention can be realized in the other concrete forms without prejudice to the spirit or basic characteristics of the invention. Therefore, from any point of view, the embodiment shall be regarded to be demonstrative and non-restrictive. The scope of the invention is restricted by the attached claim but not above description, so the meaning of equivalent elements and all changes within the scope of the claim are included in the invention. Any figure sign in the claim shall not be regarded as restriction on involved claim.

## Claims

1. A kind of thread rolling screw molten through friction, including locating tip of the cone (1), is **characterized in that**: The top of locating tip (1) of the stated cone is connected with the expanding cone (2) in a fixed way. The top of the stated expanding cone (2) is connected with the pored shaping section (3) in a fixed way. The top of the stated pored shaping section (3) is connected with the transition section (4) in a fixed way. The top of the stated transition section (4) is connected with the self-tapping thread section (5) in a fixed way. The external surface of the stated self-tapping thread section (5) is set with tapered thread (6). The top of the self-tapping thread section (5) is connected with the cylindrical locking thread section (7) in a fixed way. The external surface of the stated cylindrical locking thread section (7) is set with external thread (8). The top of the stated cylindrical locking thread section (7) is connected with the arc angle (9) in a fixed way. The top of the stated arc angle (9) is connected with the concave storage ring (10) in a fixed way. The top of the stated concave storage ring (10) is connected with the flange (11) in a fixed way.

2. A kind of thread rolling screw molten through friction stated according to Claim 1 is **characterized in that**: The top of the stated flange (11) is connected with screw head (12) in a fixed way, and one end of the stated concave storage ring (10) is equipped with circular groove.

3. A kind of thread rolling screw molten through friction stated according to Claim 2 is **characterized in that**: One end of the stated screw head (12) is set with external dodecagonal tool driving structure (16), and the other end is set with internal driving torx (13).

4. A kind of thread rolling screw molten through friction stated according to Claim 1 is **characterized in that**: The nominal diameter of the stated external thread (8) is 4.8mm, and the pitch of thread is 1.8mm.

5. A kind of thread rolling screw molten through friction stated according to Claim 1 is **characterized in that**: The thickness of the stated flange (11) is 1.6mm, and the diameter is 13.8mm.

6. A kind of thread rolling screw molten through friction stated according to Claim 1 is **characterized in that**: The diameter of the stated transition section (4) is 4mm, and the length is 1.5mm.

7. A kind of thread rolling screw molten through friction stated according to Claim 1 is **characterized in that**: The external surface of the stated pored shaping section (3), locating tip of the cone (1) and expanding cone (2) is set with the first friction thread (14), and the external surface of the stated pored shaping section (3) and locating tip of the cone (1) is set with the second friction thread (15).

8. A kind of thread rolling screw molten through friction stated according to Claim 1 is **characterized in that**: The cone angle of the stated locating tip of the cone (1) is 45°, that of the expanding cone (2) is 12° and transited in the extruded natural arc shape, that of the stated pored shaping section (3) is 30° and transited in the extruded natural arc shape, that of the stated self-tapping thread section (5) is 8°, and the connected end face of the stated locating tip of the cone (1) and expanding cone (2) is transited in fillet.
